# EUROPEAN PATENT SPECIFICATION

(11) **EP 4 302 008 B1**
(45) Date of publication and mention of the grant of the patent: **07.01.2026**
(21) Application number: 21719246.7
(22) Date of filing: 05.03.2021
(51) Int. Cl.: F16L 41/12

(54) **CONNECTING ASSEMBLY WITH A NIPPLE-TYPE CONNECTING ELEMENT**
VERBINDUNGSANORDNUNG MIT EINEM NIPPELARTIGEN VERBINDUNGSELEMENT
ENSEMBLE DE RACCORDEMENT DOTÉ D'UN ÉLÉMENT DE RACCORDEMENT DE TYPE MAMELON

(43) Date of publication of application: 10.01.2024
(73) Proprietor: PNR Italia S.r.l., 27058 Voghera (IT)
(72) Inventor: MECK, Enrico, 15121 Alessandria (IT)
(74) Representative: Savi, Massimiliano
(86) International application number: PCT/IB2021/051846
(87) International publication number: WO 2022/185100

(56) References cited:
- WO-A2-01/59352
- US-A- 5 169 177
- US-A- 5 199 749

## Description

### TECHNICAL FIELD OF THE INVENTION

The present invention belongs to the field of dispensing liquids and/or fluids. In particular, the present invention belongs to the field of fluid dispensing by means of nozzles or in general dispensing devices or elements of said fluids.

More particularly, the present invention relates to a nipple-type connecting element adapted to be fixed in a facilitated manner to a main pipe to cut off (intercept) a fluid (e.g., cooling water) passing through said main pipe by diverting at least in part the cut off fluid from a delivery portion to a supply portion of said portion of said nipple-type connecting element.

The present invention further relates to a connecting set comprising a nipple-type connecting element, said connecting set comprising elastic means for fixing said nipple-type connecting element to said main pipe and, possibly, a lever adapted to facilitate the fixing and releasing of said nipple-type connecting element to and from said main pipe, respectively. The present invention relates to a nipple-type connecting element designed so that its application to and removal from a main pipe are particularly simplified and fast so that it can be assembled simply and fast and thus at a low cost.

### BACKGROUND ART

The use of dispensing nozzles adapted to deliver fluid jets of different shapes (conical, fan-shaped, or the like) according to the applications and purposes is known in the field of liquid dispensing. In this respect see also the document published as US5199749 A.

Said nozzles or dispensing devices or elements, in general, are indeed widely used, e,g,, in cooling plants and/or systems (e.g., in the iron and steel industry), and/or in fire extinguishing plants and/or systems (e.g., in road and/or railway tunnels).

The use of said nozzles for dispensing fluids in the form of jets or sprays with the desired characteristics (shape, size, flow rate, pressure, and similar characteristics) presupposes the use of connecting elements, named nipples, each of which is adapted to be interposed between a main pipe, through which the fluid to be delivered passes, to cut off the fluid passing through said main pipe, conveying it at least partially into the dispensing device applied to the nipple itself.

The variety of dispensing nozzles, as well as the variety of applications, have promoted the development of different types of nipples but still including a common component, namely a hollow tubular portion adapted to be inserted into a hole made in the main pipe so that, with the nipple fixed to said main pipe, said hollow tubular portion of the nipple extends through said hole made in said main pipe to cut off the fluid passing through.

It goes without saying that the nipple must be fixed to the main pipe to guarantee tightness and thus avoid the risk of fluid leaks between the nipple and the pipe. Furthermore, the nipple must be capable of being fixed to the pipe and released from the pipe itself according to simple and immediate methods and/or operations. For this purpose, several solutions have been suggested and used.

For example, nipples are known in which the tubular portion intended to be inserted into the hole of the main pipe is provided with an outer thread intended to engage by screwing an inner thread of the pipe hole. Other solutions require the nipple to be welded to the pipe itself once the tubular part of the nipple has been inserted into the corresponding hole in the pipe.

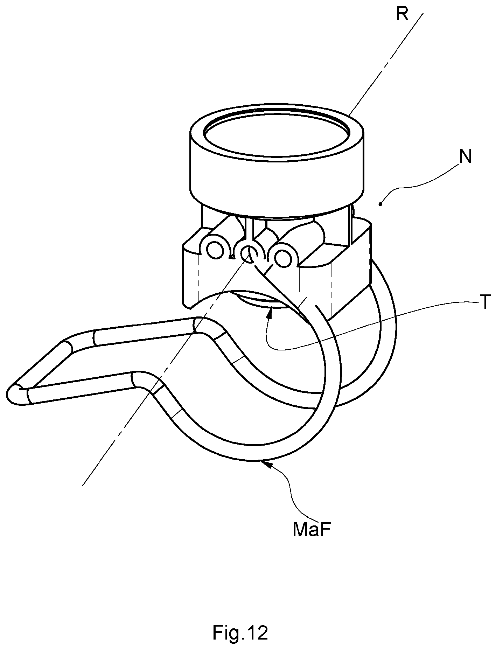

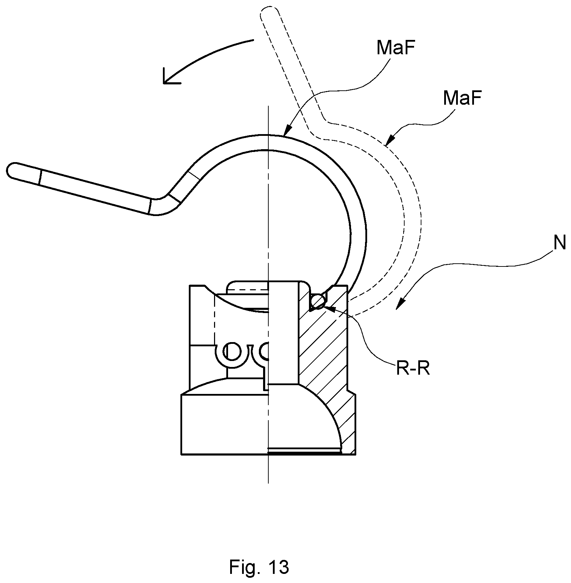

According to more recent solutions of the type depicted in figures 12 and 13, instead, the nipple N is provided with a movable contrasting part (essentially a wire spring) MaF adapted to be switched by rotation relative to a rotation axis R-R substantially parallel to the longitudinal extension axis of the pipe (not shown in figures 12 and 13; according to these solutions, the fixing methods of the nipple provide that the nipple N itself, with the wire spring MaF in the position indicated by the hatching in figure 13, is positioned at the hole of the pipe (with the tubular part T of the nipple N extending at least partially through said hole), and that subsequently the wire spring Maf is switched by rotation in the rotation direction indicated by the arrow in figure 13 until reaching the end position of figure 12, in which, following said rotation of the wire spring MaF, the nipple N is pulled against the pipe and then fixed thereto. In these cases, the nipple N comprises a gasket (not shown in figures 12 and 13), wherein the thrust of the nipple N against the pipe results in the compression of the gasket, thus achieving the desired sealing.

The nipples of the known type summarized above, despite being appreciable and widely used and employed, have several drawbacks that the applicant has overcome by means of the nipple according to the present invention.

A first drawback is related to the nipples intended to be fixed to the pipe by screwing, wherein, in this case, the fixing methods are obviously laborious and complicated, especially if performed in uncomfortable environments; furthermore, the threading of the hollow tubular part of the nipple presupposes the creation of a corresponding thread on the inner edge of the main pipe, wherein therefore the fixing of the nipple presupposes the exact correspondence between the characteristics of the tubular part of the nipple and those of the hole (thread, size, shape, etc.). Finally, the inevitable onset of rust makes releasing (unscrewing) the nipple from the main pipe (e.g., for maintenance, cleaning, and similar purposes) just as difficult, with the risk of breaking the threaded part of the nipple and the consequent need to replace the nipple itself.

Concerning nipples to be welded, it is known that welding is perceived as an operation to be carried out only in the absence of valid alternatives because it is laborious, time-consuming, dangerous in certain respects and its execution requires the availability of equipment suitable for the purpose.

Finally, in the case of nipples with wire springs, the wire spring MaF must also be sized as a function of the dimensions (diameter) of the main pipe because nipples with the same wire spring MaF cannot be fixed to pipes with different diameters. Furthermore, the wire spring MaF makes it difficult and often too expensive to manufacture and produce the nipple.

Finally, the inevitable wear of the wire MaF spring inevitably results in seal leakage, wherein the wear of the wire spring MaF results in the need to replace the entire nipple to restore the desired seal.

It is thus the main purpose of the present invention to overcome or at least minimize the drawbacks outlined above and affecting the nipples according to the prior art.

In particular, it is a first object of the present invention to provide a nipple capable of being fixed and hydraulically connected to pipes of different sizes according to simple and immediate methods, while guaranteeing a reliable and long-lasting seal at the same time.

It is a second, not secondary, object of the present invention to provide a nipple capable of being released from a main pipe in an equally simple and immediate manner.

Moreover, it is a further object of the present invention to provide a nipple adapted to be produced and manufactured with widely used materials and at low costs compatible with market requirements.

Furthermore, it is one of the objects of the present invention to provide a nipple characterized by a remarkable versatility and thus adapted to support different types of nozzles and/or dispensing devices.

Finally, it is a further object of the present invention to provide a nipple of the aforesaid type which can be used in systems of different types which can be installed in different environments, i.e. both large and medium or small size, by means of simple and/or immediate operations and which, in particular, avoids drastic structural interventions on the above-mentioned structures.

### DETAILED DESCRIPTION OF THE PRESENT INVENTION

The present invention is based on a very simple concept, namely that of using an elastic ring for fixing the nipple to the main pipe, wherein fixing the nipple results in the fluid communication being established between the nipple and the pipe.

As explained below, the general concept above provides for a very simple conformation of the nipple, for the application of which to the pipe no threaded connections of any kind or welding operations are required.

In view of the above, as well as of the problems and/or drawbacks encountered in nipples according to the background art, the present invention relates to a connecting set according to claim 1, wherein further embodiments of the nipple and the set according to the present invention are defined by the dependent claims.

According to the invention, a connecting set for hydraulically connecting a main pipe and a dispensing element comprises a nipple-type connecting element comprising a delivery portion and a dispensing portion, wherein said nipple-type connecting element is adapted to be fixed to and placed in fluid communication with said main pipe in a fixing position in which it cuts off a fluid passing through one said main pipe and conveys at least partially said fluid from said delivery portion to said dispensing portion, wherein for this purpose, said delivery portion comprises a hollow tubular portion adapted to be at least partially inserted into a corresponding hole of said main pipe, wherein said nipple-type connecting element comprises fixing means adapted to allow it to be fixed to said main pipe in said fixing position, wherein said hollow tubular portion of said delivery portion extends at least partially through said hole of said main pipe; wherein said fixing means of said nipple-type connecting element comprise a first fixing shoulder and a second fixing shoulder, wherein said connecting set comprises a fixing elastic ring adapted to be elastically stretched between said first fixing shoulder and second fixing shoulder, and wherein said first fixing shoulder and second fixing shoulder are adapted to be engaged respectively by a first portion and a second portion of said elastic ring elastically stretched between said first fixing shoulder and said second fixing shoulder so that with said nipple-type connecting element in said fastening position, and with said elastic ring elastically stretched between said first fixing shoulder and second fixing shoulder, a portion of said main pipe opposite to said nipple-type connecting element is subtended and surrounded by intermediate portions of said elastic ring by means of which said first portion and said second portion are mutually connected.

According to a described embodiment, said hollow tubular portion of said delivery portion of said nipple-type connecting element has a substantially straight longitudinal extension, wherein said first fixing shoulder and second fixing shoulder are arranged on respectively opposite sides of a plane which contains the longitudinal extension axis of said hollow tubular portion of said delivery portion. According to a described embodiment, said hollow tubular portion of said delivery portion of said nipple-type connecting element has a substantially circular cross-section, wherein said first fixing shoulder and second fixing shoulder are arranged in diametrically opposite positions relative to the longitudinal symmetry axis of said hollow tubular portion of said delivery portion.

According to a described embodiment, at least said first fixing shoulder of said nipple-type connecting element comprises a pulley-throat-shaped portion having a semicircular development or extension and adapted to accommodate said first portion of said elastic ring and comprising two mutually connected opposite shoulders.

According to a described embodiment, at least said first fixing shoulder comprises an engagement groove adapted to be used as a support fulcrum for the end of one said lever, wherein said engagement groove is shaped so that, when it is engaged by said end of said lever, said end of said lever is positioned under said throat-shaped portion of said first fixing shoulder.

According to a described embodiment, said nipple-type connecting element comprises an abutment portion which surrounds said hollow tubular portion of said delivery portion, wherein said abutment portion is delimited by an abutment surface which, with said nipple-type connecting element in said fixing position, abuts against a corresponding portion of the outer surface of said main pipe which surrounds said hole of said main pipe.

According to a described embodiment, said abutment surface is barrel-shaped and is thus adapted to be placed abutting against a corresponding portion of the outer surface of a substantially cylindrical main pipe.

According to a described embodiment, a connecting set comprises a sealing gasket adapted to be housed in a seat of said nipple-type connecting element surrounding said hollow tubular portion of said delivery portion.

According to a described embodiment, said dispensing portion of said nipple-type connecting element is adapted to be engaged by a dispensing element adapted to dispense a fluid so that said dispensing element is fixed to and in fluid communication with said nipple-type connecting element.

According to a described embodiment, said dispensing portion of said nipple-type connecting element comprises an inner or outer thread adapted to be engaged by screwing by a corresponding thread of one said dispensing element.

According to a described embodiment, a connecting set comprises a lever with a first end adapted to engage said groove, with an intermediate portion adapted to be engaged by said first portion of said elastic ring and a second end opposite to said first end and adapted to be manually grasped, wherein with said second fixing shoulder engaged by said second portion of said elastic ring and said groove engaged by said first end of said lever, the rotation of said lever in a first rotation direction results in the positioning of said first portion of said elastic ring in said pulley-throat-shaped portion of said first fixing shoulder and thus in the stretching of said elastic ring between said first fixing shoulder and said second fixing shoulder of said nipple-type connecting element.

According to a described embodiment, said intermediate portion of said lever comprises a protrusion, wherein with a second fixing shoulder engaged by said second portion of said elastic ring and said groove engaged by said first end of said lever, and with said first portion of said elastic ring positioned between said protrusion and said first end of said lever, the rotation of said lever in said first rotation direction results in the positioning of said first portion of said elastic ring in said pulley-throat-shaped portion of said first fixing shoulder and thus in the stretching of said elastic ring between said first fixing shoulder and said second fixing shoulder of said nipple-type connecting element.

According to a described embodiment, said second end of said lever is also adapted to engage said groove, wherein with said second portion of said elastic ring fixed to said second fixing shoulder, with said first portion of said elastic ring housed in said throat-shaped portion of said first fixing shoulder, and thus with said elastic ring elastically stretched between said first fixing shoulder and said second fixing shoulder and with said groove engaged by said second end of said lever, the rotation of said lever in a second rotation direction opposite to said first rotation direction results in the removal of said first portion of said elastic ring from said throat-shaped portion of said first fixing shoulder, and thus in the release of said nipple-type connecting element from said main pipe.

According to a described embodiment, a fitting set comprises a dispensing element adapted to be fixed to said dispensing portion of said nipple-type connecting element so as to be placed in fluid communication with said dispensing portion of said nipple-type connecting element.

According to a described embodiment, said dispensing portion of said nipple-type connecting element comprises an inner or outer thread, wherein said dispensing element comprises a corresponding thread by which said dispensing element can be fixed by screwing to said dispensing portion of said nipple-type connecting element.

### BRIEF DESCRIPTION OF THE FIGURES

Hereinafter, the present invention will be further explained by means of the following detailed description of the possible embodiments thereof depicted in the drawings, in which corresponding or equivalent features and/or component parts of the present invention are identified by the same reference numbers. It must be noted that the present invention is not limited to the embodiments described below and depicted in the accompanying drawings; on the contrary, variants and/or changes to the embodiments described below and depicted in the accompanying drawings which will appear clear and obvious to a person skilled in the art may fall within the scope of the present invention, which is defined in the accompanying claims.

In the drawings:
Figures 1 show perspective views of a nipple-type connecting element according to an embodiment;
Figures 2 show side views of a nipple-type connecting element, according to an embodiment;
Figures 3 show perspective views of a nipple-type connecting element according to an embodiment;
Figures 4 show side views of a nipple-type connecting element, according to an embodiment;
Figures 5 show a perspective view and a side view of a nipple according to an embodiment applied to a main pipe;
Figures 6 show a perspective view and a side view of a nipple according to an embodiment applied to a main pipe;
Figures 7 show the steps of fixing a nipple to a pipe according to an embodiment;
Figures 8 show the steps of releasing a nipple from a pipe according to an embodiment;

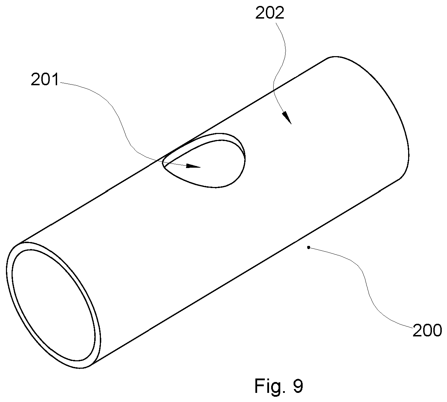

Figures 9 show a perspective view of a pipe adapted to receive a nipple according to an embodiment;

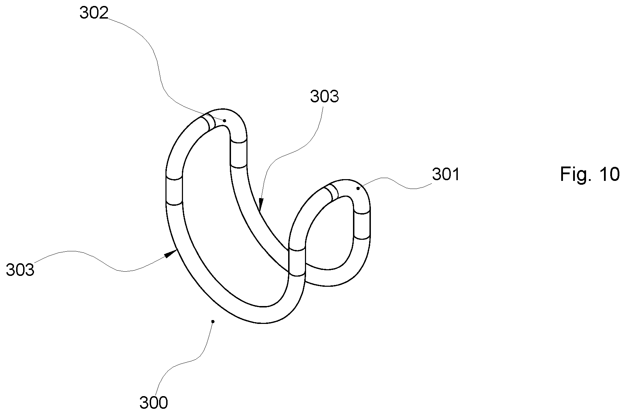

Figure 10 shows an elastic element of a connecting set according to an embodiment;

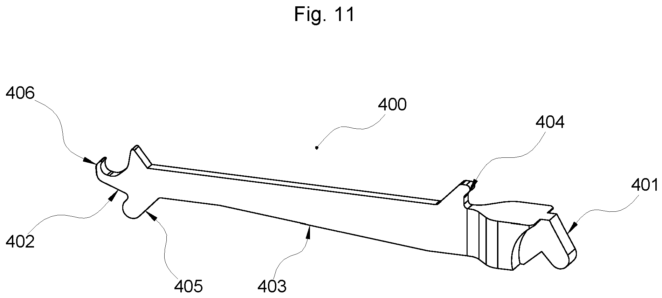

Figure 11 shows a perspective view of a lever of the connecting set according to an embodiment;
Figures 12 and 13 respectively show a perspective view and a front view of a nipple with wire spring according to the background art.

### DETAILED DESCRIPTION OF THE PRESENT INVENTION

The present invention finds particularly advantageous application in the field of dispensing systems of water or liquid in general, this being the reason why the present invention will be described hereinafter with particular reference to its applications in the field of systems of the aforesaid type.

However, it is worth specifying that the possible applications of the present invention are not limited to those described below. On the contrary, the present invention can be conveniently applied in all cases in which it is necessary to hydraulically connect a main pipe to a fluid dispensing device.

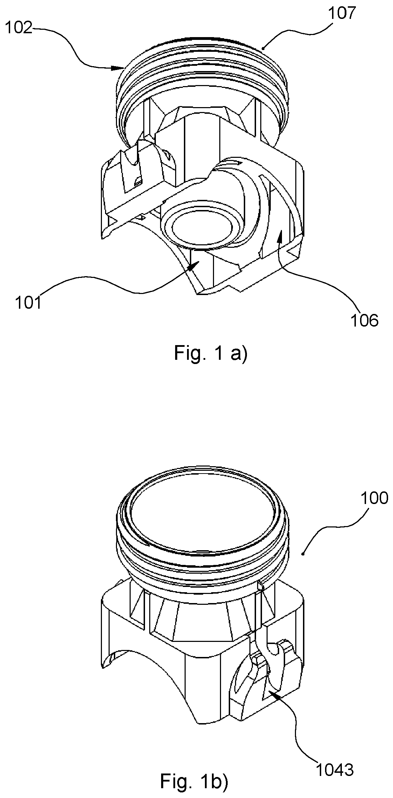

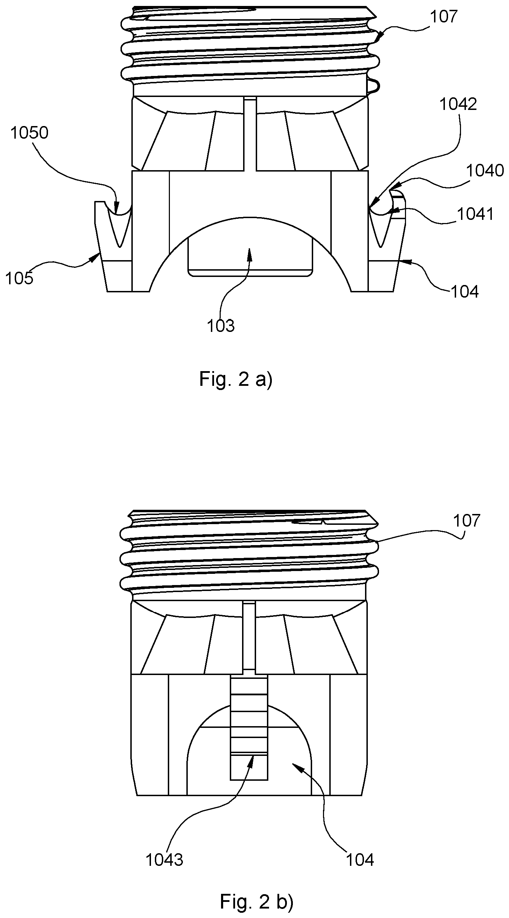

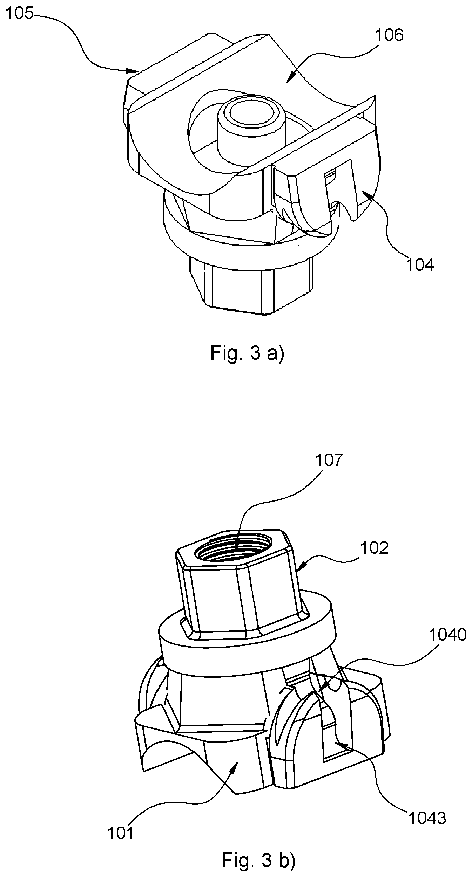

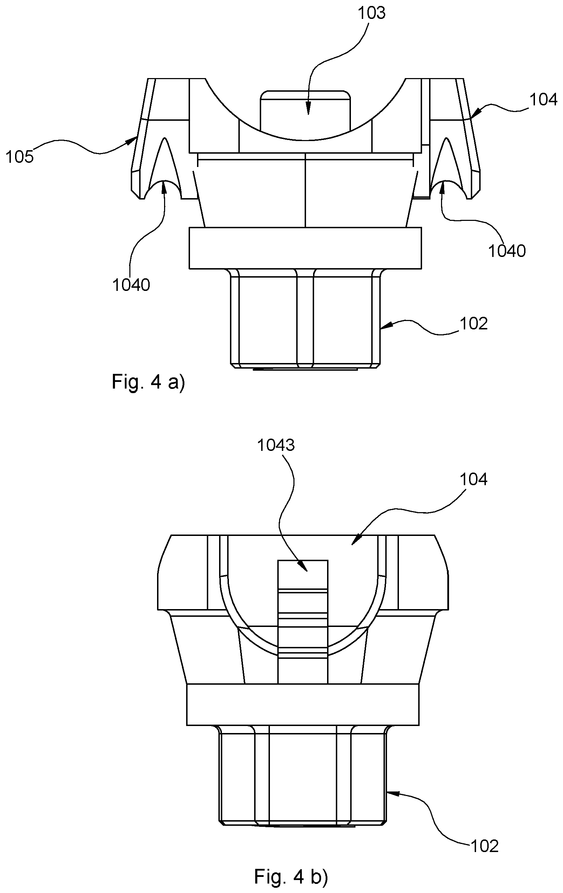

According to the embodiment depicted in figures 1, the illustrated nipple-type fitting element or device, identified by reference numeral 100 and hereinafter referred to simply as a nipple for the sake of brevity, comprises a delivery portion 101 and a dispensing portion 102, the nipple 100 being internally shaped to convey an incoming fluid to the dispensing portion 102 through the delivery portion 101. Said delivery portion 101 comprises a hollow tubular portion (cylindrical in the non-limiting embodiment shown) adapted to be inserted into a hole 201 of a main pipe 200, wherein it is therefore apparent that with the hollow tubular portion inserted through the hole 201 (and with the nipple 100 fixed to the pipe 200 according to methods clarified in detail below), the liquid or in general the fluid passing through the pipe 200 is cut off and conveyed from the delivery portion 101 to the dispensing portion 102. The dispensing portion 102 is adapted to be engaged by a dispensing device (e.g., a nozzle, not shown); for this purpose, the dispensing portion 102 comprises an outer thread 107 adapted to be engaged by screwing by a corresponding thread of one said dispensing device. The application methods of a dispensing nozzle to the dispensing portion 102 as well as types of dispensing nozzles usable in combination with the nipple 100 do not necessarily fall within the scope of the present invention and a detailed description thereof is therefore omitted for the sake of brevity. It is only specified that, in order to expand the range of dispensing nozzles that can be used in combination with the nipple according to the present invention, the embodiment of the nipple 100 depicted in figures 3 and 4 differs from the one shown in figures 1 and 2 in that, in the embodiment in figures 3 and 4, the thread 107 is internal to the dispensing portion 102.

Again as represented, the nipple 100 comprises its own fixing means comprising a first fixing shoulder 104 and a second fixing shoulder 105 extending outwardly and arranged on opposite sides of a plane containing the longitudinal extension axis of the hollow tubular portion 103, said first fixing shoulder 104 and second fixing shoulder 105 being arranged in diametrically opposite positions relative to the longitudinal symmetry axis of the portion 103 if it is cylindrical or at least having a circular inner cross-section. Since said first fixing shoulder 104 and said second fixing shoulder 105 are substantially identical, a description of solely said first fixing shoulder 104 will be given hereinafter again for the sake of brevity.

As shown, the first fixing shoulder 104 defines and comprises a pulley throat-shaped portion 1040, the portion 1040 being indeed transversely confined by a first shoulder 1041 and a second shoulder 1042 opposite to the first shoulder 1041, said first shoulder 1041 and second shoulder 1042 being connected by a bottom of the throat. The pulley throat-shaped portion 1040 has a semicircular extension, i.e. is defined by rotation about a rotation axis perpendicular to the longitudinal axis of the tubular portion 103 of a C-shaped generative curve (with the opening of the C facing the dispensing portion 102).

Furthermore, and still as shown, the first fixing shoulder 104 comprises a groove 1043 which extends from the pulley-shaped portion 1040 away from said portion 1040 and towards the inside of the first shoulder 104 and thus of the nipple 100. As clarified below, the groove 1043 is blind at the end opposite to the pulley throat-shaped portion 1040 and thus defines a support or engagement base opposite to the pulley throat-shaped portion 1040, said support or engagement base being adapted to define a support for a lever usable for constraining and releasing the nipple 100 respectively to and from the main pipe 200.

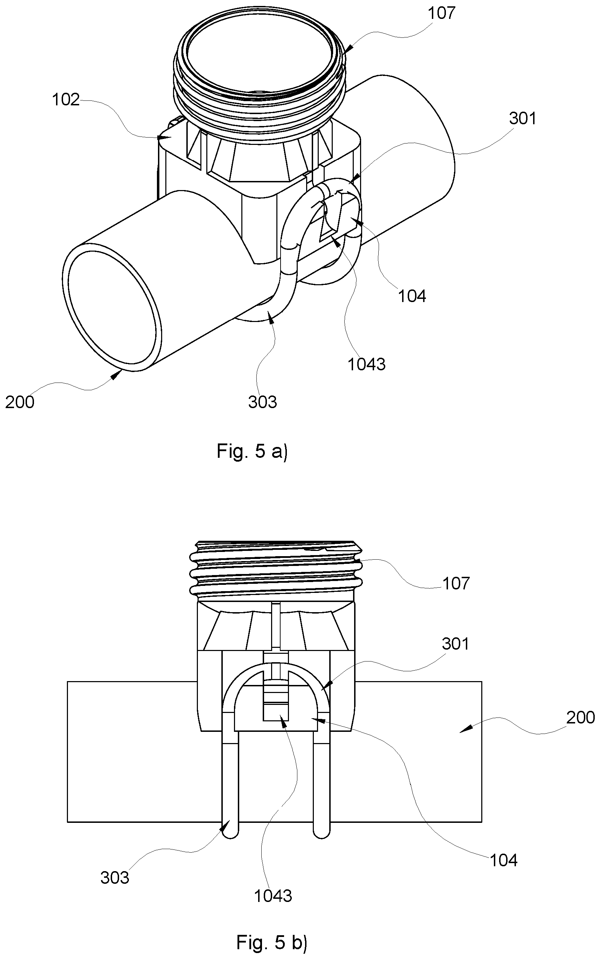

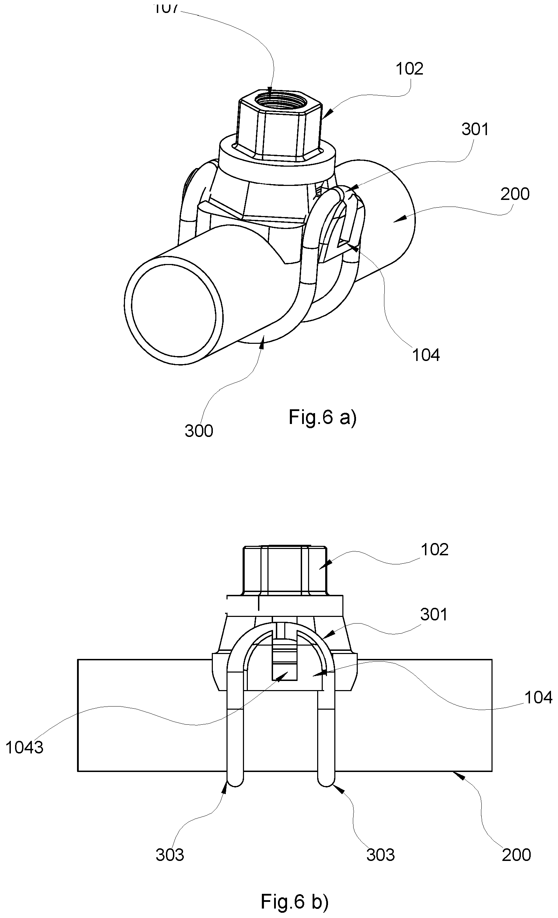

Figures 5 and 6 show the nipple 100 according to the two embodiments fixed to the main pipe 200.

As depicted, the nipple 100 is positioned on the pipe 200 at the hole 201, in particular with the hollow tubular portion 103 extending through the hole 201 (see also the following description). In this position, named fixing position, the portion of the nipple 100 which surrounds the hollow tubular portion 103 is placed abutting against the outer surface of the pipe 200, wherein, in particular, the surface portion 106 of the nipple 100 which surrounds the hollow tubular portion 103 is placed in contact with a corresponding portion of the outer surface of the pipe 200 which surrounds the hole 201. In the particular but not limited illustrated case of externally cylindrical pipe 200, the surface portion 106 of the nipple 100 is
barrel-shaped.

Again as depicted (figures 5 and 6), the nipple 100 is held in the fixing position by an elastic ring (e.g. a coil spring but also an elastic ring made of rubber) 300 stretched between the first fixing shoulder 104 and the second fixing shoulder 105, wherein a first portion 301 of the elastic ring 300 is housed in the pulley-groove shaped portion 1040 of the first fixing shoulder 104, and wherein a second portion 302 of the elastic ring 300 is housed in the pulley-groove shaped portion 1040 of the second fixing shoulder 105.

The intermediate portions 303 of the elastic ring 300 which connect said first portion 301 and second portion 302 extend below the pipe 200 and are thus in contact with the portion of the outer surface of the pipe 200 opposite to the portion of the outer surface of the pipe 200 engaged by the nipple 100 (with which the nipple 100 is in contact).

Therefore, it can be seen that the elastic tension of the ring 300 results in a traction on the nipple 100 which, in practice, is pulled by the elastic ring 300 against the pipe 100.

Furthermore, it is worth noting that an annular gasket (not shown, e.g. an O-ring) with a diameter at least slightly greater than the diameter of the hole 201 is positioned around the hollow tubular portion 103, wherein the traction applied by the elastic ring 300 on the nipple 100 results in an elastic compression of said gasket, and thus in achieving the desired seal between the main pipe 200 and the nipple 100.

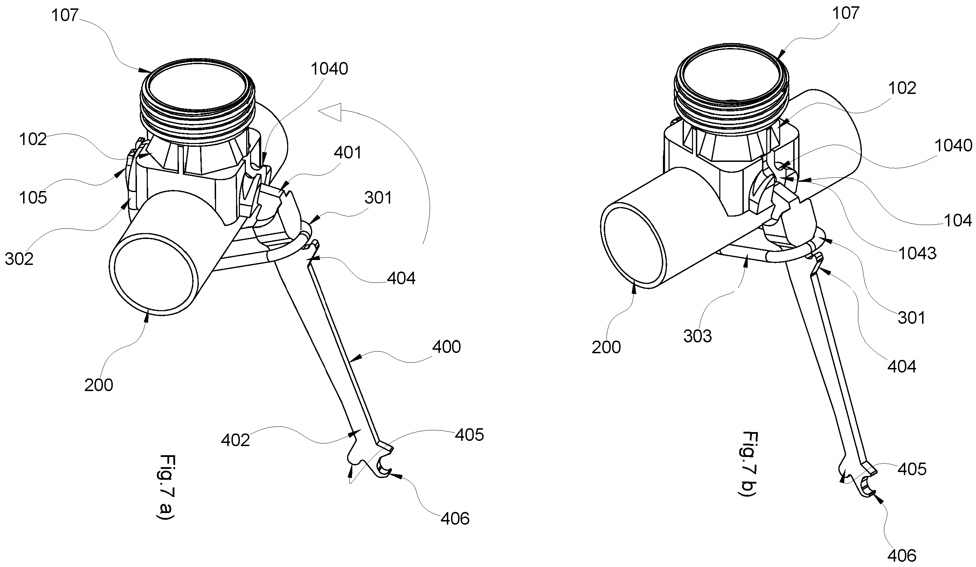

The method of fixing the nipple 100 to the pipe 200 may be summarized as follows with reference to figures 7.

As depicted, the nipple 100 is positioned on the pipe 200 as explained above and thus with the hollow tubular portion 103 which extends at least partially through the hole 201 of the pipe 200; the substantial correspondence between the outer dimensions and shape of the tubular portion 103 and the inner dimensions and shape of the hole 201 avoid longitudinal and transversal displacements of the nipple 100 relative to the pipe 200. Subsequently, a portion of the elastic ring 300 (the second portion 302 for reasons of consistency of exposition) is arranged, e.g., manually, straddling the second fixing shoulder 105, and then partially housed in the respective pulley throat-shaped portion 1040. The end 401 of a lever 400 is then passed through the elastic ring 300 and positioned in the groove 1043 of the first fixing shoulder 104 resting on the bottom base of said groove 1043. At this point, the elastic ring 300 is stretched by rotation of the lever 400 in a first rotation direction indicated by the arrow (counterclockwise relative to the figures, but in any case taking the end 402 of the lever 400 progressively closer to the nipple 100). In this manner, the lever 400 is used as a first-class lever wherein the resilient force of the elastic ring 300 is positioned between the fulcrum (the groove 1043) and the active force application point (the end 402 of the lever 400). For this purpose, the intermediate portion 402 of the lever 400 has a protrusion which prevents the first portion 301 of the elastic ring 300 from sliding on the lever 400. The aforesaid rotation then continues until the first portion of the elastic ring 300 is positioned above the first fixing shoulder 104, a position in which the first portion 301 of the elastic ring 300 slides along the lever 400 towards the end 401 going to position itself in the pulley groove-shaped portion 1040 of the first fixing shoulder 104.

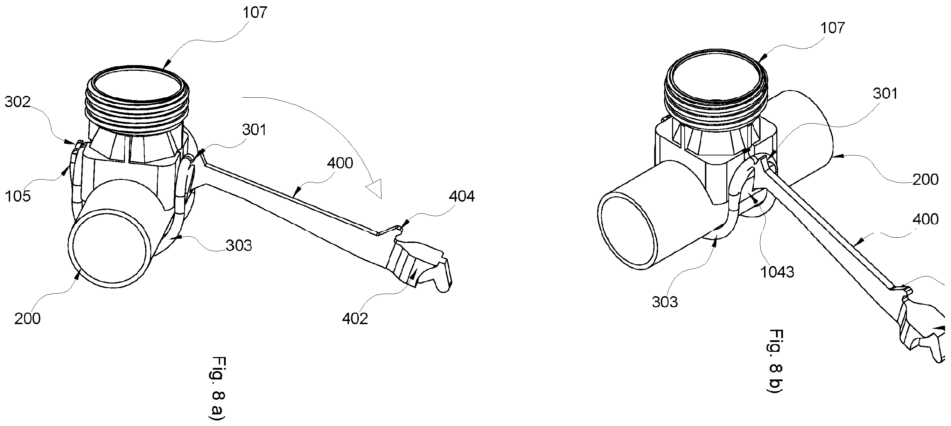

The method of releasing the nipple 1001 from the pipe 200 may be summarized as follows with reference to figures 8.

With the nipple 100 held in the fastening position by the elastic ring 300, the end 402 of the lever 400 opposite to the end is inserted into the groove 1043 of the first fixing shoulder 104. As shown, said end 402 is shaped to define a spur 405 (intended to act as a fulcrum of the lever 400 resting on the bottom base of the groove 1043), and a hook 406 which, with the spur 405 resting in the groove 1043, is positioned below the first portion 301 of the elastic ring 300 positioned on the first fixing shoulder 104 and thus at least partially housed in the relative pulley throat-shaped portion 1040. At this point, a rotation of the lever 400 in the second rotation direction indicated by the arrow in the figures and thus clockwise relative to figures 8 and contrary to the first rotation direction mentioned above, results in the use of the lever 400 as a first-class lever (with the spur 405 acting as a fulcrum between the resistance (the elastic ring 300 acting on the hook 406) and the active force (e.g., manual) on the end 401 of the lever 400, and then in extracting the first portion 301 of the ring 300 from said pulley-groove shaped portion 1040 of the first fixing shoulder 104 and then in releasing the elastic ring 300 from said first fixing shoulder 104, wherein at this point the nipple 100 can be moved away from the pipe 200.

We have thus demonstrated by means of the detailed description of the embodiments shown in the drawings given above that the present invention allows to obtain the desired objects and to overcome or at least limit the drawbacks found in the prior art.

In particular, the present invention provides a nipple-type connecting element which: is adapted to be fixed and hydraulically connected to pipes of different sizes according to simple and immediate methods, while ensuring a reliable and long-lasting seal;
is adapted to be released from a main pipe in an equally simple and immediate manner;
is adapted to be produced and manufactured with widely used materials and at low costs compatible with market requirements;
is characterized by a strong versatility and thus adapted to support nozzles and/or dispensing devices of different types;
is adapted to be used in systems of different types which can be installed in different environments, i.e. both large and medium or small size, by means of simple and/or immediate operations and which, in particular, avoid drastic structural interventions on the aforesaid structures.

Although the present invention is explained above by means of a detailed description of the embodiments thereof depicted in the drawings, the present invention is obviously not limited to the embodiments described above and shown on the drawings; on the contrary, variants and/or changes to the embodiments described and shown in the accompanying drawings appearing clear and obvious to a person skilled in the art may fall within the scope of the present invention, which is defined in the appended claims. For example, the nipple-type connecting element according to the present invention allows the widest choice of components, e.g. dispensing devices, as well as materials for manufacturing it.

And again, the nipple according to the present invention is adapted to be applied and fixed to tubular elements with any cross-section, and thus not only circular as shown, but also e.g. square or rectangular or polygonal.

The scope of protection of the present invention is thus defined by the claims.

## Claims

1. A connecting set for hydraulically connecting a main pipe (200) and a dispensing element, wherein said connecting set comprises a nipple-type connecting element (100) comprising a delivery portion (101) and a dispensing portion (102), wherein said nipple-type connecting element (100) is adapted to be fixed to and placed in fluid communication with a main pipe (200) in a fixing position in which it cuts off a fluid passing through one said main pipe (200) and conveys at least partially said fluid from said delivery portion (101) to said dispensing portion (102), wherein for this purpose, said delivery portion (101) comprises a hollow tubular portion (103) adapted to be at least partially inserted into a corresponding hole (201) of said main pipe (200), wherein said nipple-type connecting element (100) comprises fixing means adapted to allow it to be fixed to said main pipe (200) in said fixing position, wherein said hollow tubular portion (103) of said delivery portion (101) extends at least in part through said hole (201) of said main pipe (200), wherein said fixing means of said nipple-type connecting element (100) comprise a first fixing shoulder (104) and a second fixing shoulder (105), **characterized in that** said connecting set
comprises a fixing elastic ring (300) adapted to be elastically stretched between said first fixing shoulder (104) and second fixing shoulder (105), **and in that** said first fixing shoulder (104) and said second fixing shoulder (105) are adapted to be engaged respectively by a first portion (301) and a second portion (302) of said elastic ring (300) elastically stretched between said first fixing shoulder (104) and said second fixing shoulder (105) so that with said nipple-type connecting element (100) in said fastening position, and with said elastic ring (300) elastically stretched between said first fixing shoulder (104) and said second fixing shoulder (105), a portion of said main pipe (200) opposite to said nipple-type connecting element (100) is subtended and surrounded by intermediate portions (303) of said elastic ring (300) by means of which said first portion (301) and said second portion (302) of said elastic ring (300) are mutually connected.

2. A connecting set according to claim 1, **characterized in that** said hollow tubular portion (103) of said delivery portion (101) of said nipple-type connecting element (100) has a substantially straight longitudinal extension, **and in that** said first fixing shoulder (104) and second fixing shoulder (105) are arranged on respectively opposite sides of a plane, which contains the longitudinal extension axis of said hollow tubular portion (103) of said delivery portion (101).

3. A connecting set according to claim 2, **characterized in that** said hollow tubular portion (103) of said delivery portion (101) of said nipple-type connecting element (100) has a substantially circular cross-section, **and in that** said first fixing shoulder (104) and second fixing shoulder (105) are arranged in diametrically opposite positions relative to the longitudinal symmetry axis of said hollow tubular portion (103) of said delivery portion (101).

4. A connecting set according to any one of claims 1 to 3, **characterized in that** at least said first fixing shoulder (104) of said nipple-type connecting element (100) comprises a pulley-throat-shaped portion (1040) having a semicircular development or extension and adapted to accommodate said first portion (301) of said elastic ring (300) and comprising two mutually connected opposite shoulders (1041, 1042).

5. A connecting set according to any one of claims 1 to 4, **characterized in that** at least said first fixing shoulder (104) comprises an engagement groove (1043) adapted to be used as a support fulcrum for said end (401, 402) of a lever (400), **and in that** said engagement groove (1043) is shaped so that, when it is engaged by said end (401, 402) of said lever (400), said end (401, 402) of said lever (400) is positioned under said throat-shaped portion (1040) of said first fixing shoulder (104).

6. A connecting set according to any one of claims 1 to 5, **characterized in that** said nipple-type connecting element (100) comprises an abutment portion which surrounds said hollow tubular portion (103) of said delivery portion (101), **and in that** said abutment portion is delimited by an abutment surface (106) which, with said nipple-type connecting element (100) in said fixing position, abuts against a corresponding portion (202) of the outer surface of said main pipe (200) which surrounds said hole (201) of said main pipe (200).

7. A connecting set according to claim 6, **characterized in that** said abutment surface (106) is barrel-shaped and is thus adapted to be placed abutting against a corresponding portion (202) of the outer surface of a substantially cylindrical main pipe (200).

8. A connecting set according to any one of claims 1 to 7, **characterized in that** it comprises a sealing gasket adapted to be housed in a seat of said nipple-type connecting element (100) which surrounds said hollow tubular portion (103) of said delivery portion (101).

9. A connecting set according to any one of claims 1 to 8, **characterized in that** said dispensing portion (102) of said nipple-type connecting element (100) is adapted to be engaged by a dispensing element adapted to dispense a fluid so that said dispensing element is fixed to and in fluid communication with said nipple-type connecting element (100).

10. A connecting set according to claim 9, **characterized in that** said dispensing portion (102) of said nipple-type connecting element (100) comprises an inner or outer thread (107) adapted to be engaged by screwing by a corresponding thread of said dispensing element.

11. A connecting set according to any one of claims 5 to 10, **characterized in that** it comprises a lever (400) with a first end (401) adapted to engage said groove (1043), with an intermediate portion (403) adapted to be engaged by said first portion (301) of said elastic ring (300) and a second end (402) opposite to said first end (401) and adapted to be manually grasped, **and in that** with said second fixing shoulder (105) engaged by said second portion (302) of said elastic ring (300) and said groove (1043) engaged by said first end (401) of said lever (400), the rotation of said lever (400) in a first rotation direction results in the positioning of said first portion (301) of said elastic ring (300) in said pulley-throat-shaped portion (1040) of said first fixing shoulder (104) and thus in the stretching of said elastic ring (300) between said first fixing shoulder (104) and said second fixing shoulder (105) of said nipple-type connecting element (100).

12. A connecting set according to claim 11, **characterized in that** said intermediate portion (403) of said lever (400) comprises a protrusion (404), **and in that** with a second fixing shoulder (105) engaged by said second portion (301) of said elastic ring (300) and said groove (1043) engaged by said first end (401) of said lever (400), and with said first portion (301) of said elastic ring (300) positioned between said protrusion (404) and said first end (401) of said lever (400), the rotation of said lever (400) in said first rotation direction results in the positioning of said first portion (301) of said elastic ring (300) in said pulley-throat-shaped portion (1040) of said first fixing shoulder (104) and thus in the stretching of said elastic ring (300) between said first fixing shoulder (104) and said second fixing shoulder (105) of said nipple-type connecting element (100).

13. A connecting set according to any one of claims 11 and 12, **characterized in that** said second end (402) of said lever (400) is also adapted to engage said groove (1043), **and in that** with said second portion (302) of said elastic ring (300) fixed to said second fixing shoulder (105), with said first portion (301) of said elastic ring (300) housed in said pulley-throat-shaped portion (1040) of said first fixing shoulder (104), and thus with said elastic ring (300) elastically stretched between said first fixing shoulder (104) and second fixing shoulder (105), and with said groove (1043) engaged by said second end (402) of said lever (400), the rotation of said lever (400) in a second rotation direction substantially opposite to said first rotation direction results in the removal of said first portion (301) of said elastic ring (300) from said pulley-throat-shaped portion (1040) said first fixing shoulder (104), and thus in the release of said nipple-type connecting element (100) from said main pipe (200).

14. A connecting set according to any one of claims 9 to 13, **characterized in that** it comprises a dispensing element adapted to be fixed to said dispensing portion (102) of said nipple-type connecting element (100) to be placed in fluid communication with said dispensing portion (102) of said nipple-type connecting element (100).

15. A connecting set according to claim 14, **characterized in that** said dispensing portion (102) of said nipple-type connecting element (100) comprises an inner or outer thread (107), **and in that** said dispensing element comprises a corresponding thread by which said dispensing element can be fixed by screwing to said dispensing portion (102) of said nipple-type connecting element (100).

## Patentansprüche

1. Verbindungssatz zum hydraulischen Verbinden einer Hauptleitung (200) und eines Abgabeelements, wobei der Verbindungssatz ein nippelartiges Verbindungselement (100) umfasst, das einen Zuführabschnitt (101) und einen Abgabeabschnitt (102) umfasst, wobei das nippelartige Verbindungselement (100) dazu ausgelegt ist, in einer Befestigungsposition an einer Hauptleitung (200) befestigt und in Fluidverbindung mit dieser platziert zu werden, in der es ein durch die Hauptleitung (200) strömendes Fluid absperrt und das Fluid zumindest teilweise von dem Zuführabschnitt (101) zu dem Abgabeabschnitt (102) befördert, wobei der Zuführabschnitt (101) zu diesem Zweck einen hohlen rohrförmigen Abschnitt (103) umfasst, der dazu ausgelegt ist, zumindest teilweise in ein entsprechendes Loch (201) der Hauptleitung (200) eingeführt zu werden, wobei das nippelartige Verbindungselement (100) Befestigungsmittel umfasst, die dazu ausgelegt sind, es in der Befestigungsposition an der Hauptleitung (200) zu befestigen, wobei sich der hohle rohrförmige Abschnitt (103) des Zuführabschnitts (101) zumindest teilweise durch das Loch (201) der Hauptleitung (200) erstreckt;
wobei die Befestigungsmittel des nippelartigen Verbindungselements (100) eine erste Befestigungsschulter (104) und eine zweite Befestigungsschulter (105) umfassen, **dadurch gekennzeichnet, dass** der Verbindungssatz einen elastischen Befestigungsring (300) umfasst, der dazu ausgelegt ist, zwischen der ersten Befestigungsschulter (104) und der zweiten Befestigungsschulter (105) elastisch gespannt zu werden, und dadurch, dass die erste Befestigungsschulter (104) und die zweite Befestigungsschulter (105) dazu ausgelegt sind, jeweils mit einem ersten Abschnitt (301) und einem zweiten Abschnitt (302) des elastischen Rings (300) in Eingriff zu stehen, der zwischen der ersten Befestigungsschulter (104) und der zweiten Befestigungsschulter (105) elastisch gespannt ist, so dass, wenn sich das nippelartige Verbindungselement (100) in der Befestigungsposition befindet und der elastische Ring (300) zwischen der ersten Befestigungsschulter (104) und der zweiten Befestigungsschulter (105) elastisch gespannt ist, ein Abschnitt der Hauptleitung (200) gegenüber dem nippelartigen Verbindungselement (100) von Zwischenabschnitten (303) des elastischen Rings (300) überspannt und umgeben ist, durch die der erste Abschnitt (301) und der zweite Abschnitt (302) des elastischen Rings (300) miteinander verbunden sind.

2. Verbindungssatz nach Anspruch 1, **dadurch gekennzeichnet, dass** der hohle rohrförmige Abschnitt (103) des Zuführabschnitts (101) des nippelartigen Verbindungselements (100) eine im Wesentlichen gerade Längserstreckung aufweist, und dadurch, dass die erste Befestigungsschulter (104) und die zweite Befestigungsschulter (105) jeweils auf gegenüberliegenden Seiten einer Ebene angeordnet sind, die die Längserstreckungsachse des hohlen rohrförmigen Abschnitts (103) des Zuführabschnitts (101) enthält.

3. Verbindungssatz nach Anspruch 2, **dadurch gekennzeichnet, dass** der hohle rohrförmige Abschnitt (103) des Zuführabschnitts (101) des nippelartigen Verbindungselements (100) einen im Wesentlichen kreisförmigen Querschnitt aufweist, und dadurch, dass die erste Befestigungsschulter (104) und die zweite Befestigungsschulter (105) in diametral gegenüberliegenden Positionen relativ zur Längssymmetrieachse des hohlen rohrförmigen Abschnitts (103) des Zuführabschnitts (101) angeordnet sind.

4. Verbindungssatz nach einem der Ansprüche 1 bis 3, **dadurch gekennzeichnet, dass** zumindest die erste Befestigungsschulter (104) des nippelartigen Verbindungselements (100) einen riemenscheibenkragenförmigen Abschnitt (1040) mit einer halbkreisförmigen Ausdehnung oder Erstreckung aufweist und zum Aufnehmen des ersten Abschnitts (301) des elastischen Rings (300) ausgelegt ist und zwei miteinander verbundene gegenüberliegende Schultern (1041, 1042) umfasst.

5. Verbindungssatz nach einem der Ansprüche 1 bis 4, **dadurch gekennzeichnet, dass** zumindest die erste Befestigungsschulter (104) eine Eingriffsnut (1043) umfasst, die dazu ausgelegt ist, als Stützpunkt für das Ende (401, 402) eines Hebels (400) verwendet zu werden, und dadurch, dass die Eingriffsnut (1043) so geformt ist, dass, wenn sie mit dem Ende (401, 402) des Hebels (400) in Eingriff steht, das Ende (401, 402) des Hebels (400) unter dem kragenförmigen Abschnitt (1040) der ersten Befestigungsschulter (104) positioniert ist.

6. Verbindungssatz nach einem der Ansprüche 1 bis 5, **dadurch gekennzeichnet, dass** das nippelartige Verbindungselement (100) einen Anschlagabschnitt umfasst, der den hohlen rohrförmigen Abschnitt (103) des Zuführabschnitts (101) umgibt, und dadurch, dass der Anschlagabschnitt durch eine Anschlagfläche (106) begrenzt ist, die, wenn sich das nippelartige Verbindungselement (100) in der Befestigungsposition befindet, an einem entsprechenden Abschnitt (202) der Außenfläche der Hauptleitung (200) anliegt, der das Loch (201) der Hauptleitung (200) umgibt.

7. Verbindungssatz nach Anspruch 6, **dadurch gekennzeichnet, dass** die Anschlagfläche (106) trommelförmig ist und somit dazu ausgelegt ist, an einem entsprechenden Abschnitt (202) der Außenfläche einer im Wesentlichen zylindrischen Hauptleitung (200) anliegend angeordnet zu werden.

8. Verbindungssatz nach einem der Ansprüche 1 bis 7, **dadurch gekennzeichnet, dass** er eine Dichtungsmanschette umfasst, die dazu ausgelegt ist, in einem Sitz des nippelartigen Verbindungselements (100) untergebracht zu werden, das den hohlen rohrförmigen Abschnitt (103) des Zuführabschnitts (101) umgibt.

9. Verbindungssatz nach einem der Ansprüche 1 bis 8, **dadurch gekennzeichnet, dass** der Abgabeabschnitt (102) des nippelartigen Verbindungselements (100) dazu ausgelegt ist, mit einem Abgabeelement in Eingriff zu stehen, das zum Abgeben eines Fluids ausgelegt ist, so dass das Abgabeelement an dem nippelartigen Verbindungselement (100) befestigt ist und mit diesem in Fluidverbindung steht.

10. Verbindungssatz nach Anspruch 9, **dadurch gekennzeichnet, dass** der Abgabeabschnitt (102) des nippelartigen Verbindungselements (100) ein Innen- oder Außengewinde (107) umfasst, das dazu ausgelegt ist, durch Anschrauben mit einem entsprechenden Gewinde des Abgabeelements in Eingriff zu stehen.

11. Verbindungssatz nach einem der Ansprüche 5 bis 10, **dadurch gekennzeichnet, dass** er einen Hebel (400) mit einem ersten Ende (401) umfasst, das dazu ausgelegt ist, in die Nut (1043) einzugreifen, mit einem Zwischenabschnitt (403), der dazu ausgelegt ist, mit dem ersten Abschnitt (301) des elastischen Rings (300) in Eingriff zu stehen, und einem zweiten Ende (402) gegenüber dem ersten Ende (401), das zum manuellen Ergreifen ausgelegt ist, und dadurch, dass, wenn die zweite Befestigungsschulter (105) mit dem zweiten Abschnitt (302) des elastischen Rings (300) in Eingriff steht und die Nut (1043) mit dem ersten Ende (401) des Hebels (400) in Eingriff steht, die Drehung des Hebels (400) in einer ersten Drehrichtung dazu führt, dass der erste Abschnitt (301) des elastischen Rings (300) in dem riemenscheibenkragenförmigen Abschnitt (1040) der ersten Befestigungsschulter (104) positioniert wird und somit der elastische Ring (300) zwischen der ersten Befestigungsschulter (104) und der zweiten Befestigungsschulter (105) des nippelartigen Verbindungselements (100) gespannt wird.

12. Verbindungssatz nach Anspruch 11, **dadurch gekennzeichnet, dass** der Zwischenabschnitt (403) des Hebels (400) einen Vorsprung (404) umfasst, und dadurch, dass, wenn eine zweite Befestigungsschulter (105) mit dem zweiten Abschnitt (301) des elastischen Rings (300) in Eingriff steht und die Nut (1043) mit dem ersten Ende (401) des Hebels (400) in Eingriff steht, und wenn der erste Abschnitt (301) des elastischen Rings (300) zwischen dem Vorsprung (404) und dem ersten Ende (401) des Hebels (400) positioniert ist, die Drehung des Hebels (400) in der ersten Drehrichtung dazu führt, dass der erste Abschnitt (301) des elastischen Rings (300) in dem riemenscheibenkragenförmigen Abschnitt (1040) der ersten Befestigungsschulter (104) positioniert wird und somit der elastische Ring (300) zwischen der ersten Befestigungsschulter (104) und der zweiten Befestigungsschulter (105) des nippelartigen Verbindungselements (100) gespannt wird.

13. Verbindungssatz nach einem der Ansprüche 11 und 12, **dadurch gekennzeichnet, dass** das zweite Ende (402) des Hebels (400) ebenfalls dazu ausgelegt ist, in die Nut (1043) einzugreifen, und dadurch, dass, wenn der zweite Abschnitt (302) des elastischen Rings (300) an der zweiten Befestigungsschulter (105) befestigt ist, wobei der erste Abschnitt (301) des elastischen Rings (300) in dem riemenscheibenkragenförmigen Abschnitt (1040) der ersten Befestigungsschulter (104) untergebracht ist und somit der elastische Ring (300) zwischen der ersten Befestigungsschulter (104) und der zweiten Befestigungsschulter (105) elastisch gespannt ist, und wenn die Nut (1043) mit dem zweiten Ende (402) des Hebels (400) in Eingriff steht, die Drehung des Hebels (400) in einer zweiten Drehrichtung, die im Wesentlichen der ersten Drehrichtung entgegengesetzt ist, dazu führt, dass der erste Abschnitt (301) des elastischen Rings (300) aus dem riemenscheibenkragenförmigen Abschnitt (1040) der ersten Befestigungsschulter (104) entfernt wird und somit das nippelartige Verbindungselement (100) aus der Hauptleitung (200) freigegeben wird.

14. Verbindungssatz nach einem der Ansprüche 9 bis 13, **dadurch gekennzeichnet, dass** er ein Abgabeelement umfasst, das dazu ausgelegt ist, an dem Abgabeabschnitt (102) des nippelartigen Verbindungselements (100) befestigt zu sein, um in Fluidverbindung mit dem Abgabeabschnitt (102) des nippelartigen Verbindungselements (100) platziert zu sein.

15. Verbindungssatz nach Anspruch 14, **dadurch gekennzeichnet, dass** der Abgabeabschnitt (102) des nippelartigen Verbindungselements (100) ein Innen- oder Außengewinde (107) umfasst, und dadurch, dass das Abgabeelement ein entsprechendes Gewinde umfasst, mit dem das Abgabeelement durch Anschrauben an dem Abgabeabschnitt (102) des nippelartigen Verbindungselements (100) befestigt werden kann.

## Revendications

1. Ensemble de raccordement pour raccorder hydrauliquement un tuyau principal (200) et un élément de distribution, dans lequel ledit ensemble de raccordement comprend un élément de raccordement de type mamelon (100) comprenant une portion de délivrance (101) et une portion de distribution (102), dans lequel ledit élément de raccordement de type mamelon (100) est adapté pour être fixé et placé en communication fluidique avec un tuyau principal (200) dans une position de fixation dans laquelle il coupe un fluide passant à travers ledit tuyau principal (200) et transporte au moins partiellement ledit fluide à partir de ladite portion de délivrance (101) à ladite portion de distribution (102), dans lequel à cet effet, ladite portion de délivrance (101) comprend une portion tubulaire creuse (103) adaptée pour être au moins partiellement insérée dans un trou correspondant (201) dudit tuyau principal (200), dans lequel ledit élément de raccordement de type mamelon (100) comprend des moyens de fixation adaptés pour lui permettre d'être fixé audit tuyau principal (200) dans ladite position de fixation, dans lequel ladite portion tubulaire creuse (103) de ladite portion de délivrance (101) s'étend au moins en partie à travers ledit trou (201) dudit tuyau principal (200) ;
dans lequel lesdits moyens de fixation dudit élément de raccordement de type mamelon (100) comprennent un premier épaulement de fixation (104) et un deuxième épaulement de fixation (105), **caractérisé en ce que** ledit ensemble de raccordement comprend une bague élastique de fixation (300) adaptée pour être élastiquement tendue entre ledit premier épaulement de fixation (104) et ledit deuxième épaulement de fixation (105), et **en ce que** ledit premier épaulement de fixation (104) et ledit deuxième épaulement de fixation (105) sont adaptés pour venir en prise respectivement par une première portion (301) et une deuxième portion (302) de ladite bague élastique (300) étirée élastiquement entre ledit premier épaulement de fixation (104) et ledit deuxième épaulement de fixation (105) de sorte qu'avec ledit élément de raccordement de type mamelon (100) dans ladite position de fixation, et avec ladite bague élastique (300) étirée élastiquement entre ledit premier épaulement de fixation (104) et ledit deuxième épaulement de fixation (105), une portion dudit tuyau principal (200) opposée audit élément de raccordement de type mamelon (100) est sous-tendue et entourée par des portions intermédiaires (303) de ladite bague élastique (300) au moyen desquelles ladite première portion (301) et ladite deuxième portion (302) de ladite bague élastique (300) sont mutuellement raccordées.

2. Ensemble de raccordement selon la revendication 1, **caractérisé en ce que** ladite portion tubulaire creuse (103) de ladite portion de délivrance (101) dudit élément de raccordement de type mamelon (100) a une extension longitudinale sensiblement droite, et **en ce que** ledit premier épaulement de fixation (104) et deuxième épaulement de fixation (105) sont disposés sur des côtés respectivement opposés d'un plan, qui contient l'axe d'extension longitudinale de ladite portion tubulaire creuse (103) de ladite portion de délivrance (101).

3. Ensemble de raccordement selon la revendication 2, **caractérisé en ce que** ladite portion tubulaire creuse (103) de ladite portion de délivrance (101) dudit élément de raccordement de type mamelon (100) a une section transversale sensiblement circulaire, et **en ce que** ledit premier épaulement de fixation (104) et ledit deuxième épaulement de fixation (105) sont disposés dans des positions diamétralement opposées par rapport à l'axe de symétrie longitudinal de ladite portion tubulaire creuse (103) de ladite portion de délivrance (101).

4. Ensemble de raccordement selon l'une quelconque des revendications 1 à 3, **caractérisé en ce qu'**au moins ledit premier épaulement de fixation (104) dudit élément de raccordement de type mamelon (100) comprend une portion en forme de col de poulie (1040) ayant un développement ou une extension semi-circulaire et adaptée pour recevoir ladite première portion (301) de ladite bague élastique (300) et comprenant deux épaulements opposés mutuellement raccordés (1041, 1042).

5. Ensemble de raccordement selon l'une quelconque des revendications 1 à 4, **caractérisé en ce qu'**au moins ledit premier épaulement de fixation (104) comprend une rainure de mise en prise (1043) adaptée pour être utilisée comme point d'appui pour ladite extrémité (401, 402) d'un levier (400), et **en ce que** ladite rainure de mise en prise (1043) est formée de telle sorte que, lorsqu'elle vient en prise avec ladite extrémité (401, 402) dudit levier (400), ladite extrémité (401, 402) dudit levier (400) est positionnée sous ladite portion en forme de col (1040) dudit premier épaulement de fixation (104).

6. Ensemble de raccordement selon l'une quelconque des revendications 1 à 5, **caractérisé en ce que** ledit élément de raccordement de type mamelon (100) comprend une portion de butée qui entoure ladite portion tubulaire creuse (103) de ladite portion de délivrance (101), et **en ce que** ladite portion de butée est délimitée par une surface de butée (106) qui, avec ledit élément de raccordement de type mamelon (100) dans ladite position de fixation, bute contre une portion correspondante (202) de la surface extérieure dudit tuyau principal (200) qui entoure ledit trou (201) dudit tuyau principal (200).

7. Ensemble de raccordement selon la revendication 6, **caractérisé en ce que** ladite surface de butée (106) est en forme de tonneau et est ainsi adaptée pour être placée en butée contre une portion correspondante (202) de la surface extérieure d'un tuyau principal sensiblement cylindrique (200).

8. Ensemble de raccordement selon l'une quelconque des revendications 1 à 7, **caractérisé en ce qu'**il comprend un joint d'étanchéité adapté pour être logé dans un siège dudit élément de raccordement de type mamelon (100) qui entoure ladite portion tubulaire creuse (103) de ladite portion de délivrance (101).

9. Ensemble de raccordement selon l'une quelconque des revendications 1 à 8, **caractérisé en ce que** ladite portion de distribution (102) dudit élément de raccordement de type mamelon (100) est adaptée pour venir en prise avec un élément de distribution adapté pour distribuer un fluide de sorte que ledit élément de distribution est fixé sur, et en communication fluidique avec ledit élément de raccordement de type mamelon (100).

10. Ensemble de raccordement selon la revendication 9, **caractérisé en ce que** ladite portion de distribution (102) dudit élément de raccordement de type mamelon (100) comprend un filetage interne ou externe (107) adapté pour venir en prise par vissage avec un filetage correspondant dudit élément de distribution.

11. Ensemble de raccordement selon l'une quelconque des revendications 5 à 10, **caractérisé en ce qu'**il comprend un levier (400) avec une première extrémité (401) adaptée pour venir en prise avec ladite rainure (1043), avec une portion intermédiaire (403) adaptée pour venir en prise avec ladite première portion (301) de ladite bague élastique (300) et une deuxième extrémité (402) opposée à ladite première extrémité (401) et adaptée pour être saisie manuellement, et **en ce qu'**avec ledit deuxième épaulement de fixation (105) venant en prise avec ladite deuxième portion (302) de ladite bague élastique (300) et ladite rainure (1043) venant en prise avec ladite première extrémité (401) dudit levier (400), la rotation dudit levier (400) dans un premier sens de rotation entraîne le positionnement de ladite première portion (301) de ladite bague élastique (300) dans ladite portion en forme de col de poulie (1040) dudit premier épaulement de fixation (104) et donc l'étirement de ladite bague élastique (300) entre ledit premier épaulement de fixation (104) et ledit deuxième épaulement de fixation (105) dudit élément de raccordement de type mamelon (100).

12. Ensemble de raccordement selon la revendication 11, **caractérisé en ce que** ladite portion intermédiaire (403) dudit levier (400) comprend une saillie (404), et **en ce qu'**avec un deuxième épaulement de fixation (105) venant en prise avec ladite deuxième portion (301) de ladite bague élastique (300) et ladite rainure (1043) venant en prise avec ladite première extrémité (401) dudit levier (400), et avec ladite première portion (301) de ladite bague élastique (300) positionnée entre ladite saillie (404) et ladite première extrémité (401) dudit levier (400), la rotation dudit levier (400) dans ledit premier sens de rotation entraîne le positionnement de ladite première portion (301) de ladite bague élastique (300) dans ladite portion en forme de col de poulie (1040) dudit premier épaulement de fixation (104) et donc l'étirement de ladite bague élastique (300) entre ledit premier épaulement de fixation (104) et ledit deuxième épaulement de fixation (105) dudit élément de raccordement de type mamelon (100).

13. Ensemble de raccordement selon l'une quelconque des revendications 11 et 12, **caractérisé en ce que** ladite deuxième extrémité (402) dudit levier (400) est également adaptée pour entrer en prise avec ladite rainure (1043), et **en ce que**, avec ladite deuxième portion (302) de ladite bague élastique (300) fixée audit deuxième épaulement de fixation (105), avec ladite première portion (301) de ladite bague élastique (300) logée dans ladite portion en forme de col de poulie (1040) dudit premier épaulement de fixation (104), et donc avec ladite bague élastique (300) étirée élastiquement entre ledit premier épaulement de fixation (104) et ledit deuxième épaulement de fixation (105), et avec ladite rainure (1043) venant en prise avec ladite deuxième extrémité (402) dudit levier (400), la rotation dudit levier (400) dans un deuxième sens de rotation sensiblement opposé audit premier sens de rotation entraîne le retrait de ladite première portion (301) de ladite bague élastique (300) de ladite portion en forme de col de poulie (1040) dudit premier épaulement de fixation (104), et donc la libération dudit élément de raccordement de type mamelon (100) dudit tuyau principal (200).

14. Ensemble de raccordement selon l'une quelconque des revendications 9 à 13, **caractérisé en ce qu'**il comprend un élément de distribution adapté pour être fixé à ladite portion de distribution (102) dudit élément de raccordement de type mamelon (100) pour être placé en communication fluidique avec ladite portion de distribution (102) dudit élément de raccordement de type mamelon (100).

15. Ensemble de raccordement selon la revendication 14, **caractérisé en ce que** ladite portion de distribution (102) dudit élément de raccordement de type mamelon (100) comprend un filetage interne ou externe (107), et **en ce que** ledit élément de distribution comprend un filetage correspondant par lequel ledit élément de distribution peut être fixé par vissage à ladite portion de distribution (102) dudit élément de raccordement de type mamelon (100).
